# EUROPÄISCHE PATENTSCHRIFT

(11) **EP 4 293 363 B1**
(45) Veröffentlichungstag und Bekanntmachung des Hinweises auf die Patenterteilung: **15.10.2025**
(21) Anmeldenummer: 23172778.5
(22) Anmeldetag: 11.05.2023
(51) Int. Cl.: G01P 3/487

(54) **SIGNALGEBER ZUR ERMITTLUNG EINER FAHRZEUGGESCHWINDIGKEIT UND FAHRZEUG MIT EINEM SIGNALGEBER**
SIGNAL GENERATOR FOR DETERMINING A VEHICLE SPEED AND VEHICLE HAVING A SIGNAL GENERATOR
TRANSMETTEUR DE SIGNAL POUR DÉTERMINER UNE VITESSE DE VÉHICULE ET VÉHICULE ÉQUIPÉ D'UN TRANSMETTEUR DE SIGNAL

(30) Priorität: 14.06.2022 DE 102022205998
(43) Veröffentlichungstag der Anmeldung: 20.12.2023
(73) Patentinhaber: Robert Bosch GmbH, 70442 Stuttgart (DE)
(72) Erfinder: Pletinckx, Jo, 74372 Sersheim (DE); Dackermann, Tim, 72074 Tuebingen (DE); Hau, Julian, 72768 Reutlingen (DE); Stegmaier, Juergen, 72827 Wannweil (DE); Lipowsky, Tobias Dominik, 70794 Filderstadt (DE)

(56) Entgegenhaltungen:
- DE-A1- 4 007 653
- DE-B3- 102021 200 622
- DE-T2- 69 412 564
- US-A- 5 008 647

## Beschreibung

### Offenbarung der Erfindung

Die Erfindung betrifft zumindest einen, insbesondere genau einen, Signalgeber zur Ermittlung einer Fahrzeuggeschwindigkeit, insbesondere einer Fahrradgeschwindigkeit, aufweisend eine Felderzeugungseinheit, die dazu ausgebildet ist, ein Signal in Form eines zeitlich und/oder räumlich variierenden magnetischen Felds zu erzeugen, wobei der Signalgeber eine Elektronik zur Steuerung oder Regelung der Felderzeugungseinheit aufweist. Es wird vorgeschlagen, dass das Signal eine Signaldauer aufweist, die in einem Bereich zwischen 5 ms und 40 ms, insbesondere zwischen 8 und 25 ms, vorzugsweise zwischen 10 und 18 ms, liegt, und dass das Signal eine Signalstärke aufweist, die während der Signaldauer variiert, wobei die Signalstärke vorzugsweise als eine Amplitude des Signals ausgebildet ist. Vorteilhaft kann mittels des Signalgebers ein gezieltes und/oder präzises Fahrzeuggeschwindigkeitssignal bereitgestellt werden.

Das Fahrzeug kann als ein motorisiertes oder als ein nicht motorisiertes Fahrzeug ausgebildet sein. Das Fahrzeug weist vorzugsweise eine Antriebseinheit auf, die in Form eines elektrischen Motors ausgebildet ist. Das Fahrzeug kann einspurig, zweispurig oder mehrspurig ausgebildet sein. Das Fahrzeug ist vorzugsweise als ein Elektrofahrrad ausgebildet. Unter einem Elektrofahrrad soll im Zusammenhang dieser Anmeldung insbesondere ein Fahrrad verstanden werden, dass eine Antriebseinheit zur Unterstützung des Fahrers aufweist. Das Elektrofahrrad ist vorzugsweise als ein E-Bike, ein Pedelec, ein Lastenfahrrad, ein Klappfahrrad oder dergleichen ausgebildet. Eine Antriebseinheit des Elektrofahrrads weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit einer Energieversorgungsvorrichtung zur Versorgung der Antriebseinheit mit Energie verbunden. Die Energieversorgungseinheit ist vorzugsweise als ein Akkupack ausgebildet und weist ein Ackugehäuse auf, das bevorzugt lösbar mit einem Rahmen des Fahrrads verbunden ist. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, GNSS-Empfänger, Magnetsensoren oder dergleichen aufweisen kann. Zudem umfasst die Elektronik bevorzugt eine Kommunikationsschnittstelle zur drahtlosen Verbindung des Elektrofahrrads mit einer Steuervorrichtung und/oder einem Server.

Der Signalgeber ist insbesondere Teil eines Systems, das den Signalgeber und einen Signalempfänger umfasst. Der Signalempfänger ist zur Erfassung des Signals des Signalgebers und zur Ermittlung einer Fahrzeuggeschwindigkeit basierend auf dem Signal des Signalgebers ausgebildet ist. Bei der Fahrzeuggeschwindigkeit kann es sich dabei um eine tatsächlich Fahrzeuggeschwindigkeit oder einer virtuellen Fahrzeuggeschwindigkeit handeln. Ob es sich bei der ermittelten Fahrzeuggeschwindigkeit um eine tatsächlich oder virtuelle Fahrzeuggeschwindigkeit handelt, basiert dabei auf dem durch den Signalgeber bereitgestellten Signal. Der Signalempfänger ist vorzugsweise im Fahrzeug, insbesondere im Elektrofahrrad, integriert ausgebildet. Der Signalempfänger ist vorzugsweise einer Elektronik des Fahrzeugs zugeordnet, die zur Steuerung oder Regelung des Fahrzeugs insbesondere basierend auf der Fahrzeuggeschwindigkeit vorgesehen ist.

Der Signalgeber ist insbesondere als ein Zubehör ausgebildet, das vorzugsweise werkzeuglos lösbar mit dem Fahrzeug verbindbar ist. Der Signalgeber kann eine oder mehrere Komponenten aufweisen, die drahtlos oder drahtgebunden miteinander verbunden sind, wobei jede Komponente ein Gehäuse aufweist. Vorzugsweise sind die Felderzeugungseinheit und die Elektronik des Signalgebers in einem einzelnen beziehungsweise einem gemeinsamen Gehäuse angeordnet. Die Felderzeugungseinheit kann beispielsweise als ein Elektromagnet ausgebildet sein.

Der Signalgeber umfasst vorzugsweise zumindest eine Energieversorgungseinheit zur Energieversorgung der Felderzeugungseinheit und/oder der Elektronik. Die Energieversorgungseinheit kann wiederaufladbar, beispielhaft als Li-Ion Ackuzelle, ausgebildet sein. Die Energieversorgungseinheit kann austauschbar im Gehäuse des Signalgebers angeordnet sein, beispielhaft in einem separaten Fach, das mittels eines Deckels vor Staub, Feuchtigkeit und Spritzwasser geschützt ist.

Die Signaldauer kann als eine Zeit ausgebildet sein, in der der Signalgeber ein Signal ausgibt beziehungsweise sendet. Alternativ kann unter der Signaldauer auch eine Halbwertsbreite des Signals, beispielsweise eine Halbwertsbreite eines gausförmigen Signals verstanden werden. Alternativ oder zusätzlich ist auch denkbar, dass das Signal in der erzeugten Magnetfeldstärke variiert und eine Minimalstärke und eine Maximalstärke aufweist, wobei die Signaldauer einem Abstand zwischen den Extrempunkten entspricht.

Der Signalgeber umfasst vorzugsweise eine Kommunikationsschnittstelle zur drahtlosen und/oder zum drahtgebundenen Austausch von Informationen und/oder Daten zwischen dem Signalgeber und dem Fahrzeug und/oder einer externen Steuervorrichtung. Die externe Steuervorrichtung kann beispielsweise als ein Smartphone, als eine Smartwatch, ein Computer oder dergleichen ausgebildet sein. Bevorzugt weist die externe Steuervorrichtung eine Anwendungssoftware (APP) zur Einstellung des Signalgebers auf. Die APP ist vorzugsweise dazu ausgebildet, das Signal des Signalgebers einzustellen.

Des Weiteren wird vorgeschlagen, dass über das Signal, insbesondere über eine Form des Signals oder einen Abstand zweier Signale, eine Geschwindigkeit ermittelbar ist. Vorteilhaft kann dadurch eine präzise Ermittlung der Geschwindigkeit gewährleistet werden. Bei der Form des Signals kann es sich beispielsweise um einen spezifischen Verlauf eines Abschnitts des Signals handeln, insbesondere um den Verlauf einer Flanke des Signals.

Weiterhin wird vorgeschlagen, dass der Signalgeber eine Geschwindigkeitserfassungseinheit zur Erfassung einer Geschwindigkeitskenngröße aufweist. Vorteilhaft kann dadurch die Steuerung des Signals optimiert werden. Beispielsweise ist denkbar, dass dem Signalgeber über eine externe Steuervorrichtung eine Geschwindigkeit oder eine Geschwindigkeitskenngröße bereitgestellt wird. Es ist ebenso denkbar, dass das Fahrzeug die Geschwindigkeitskenngröße in Form eines GPS-Signals und/oder in Form einer durch das Fahrzeug ermittelten Geschwindigkeit dem Signalgeber bereitstellt. Es ist ebenso denkbar, dass das Fahrzeug ein Magnetelement an einem sich bei der Fahrt rotierenden Bauteil, wie beispielsweise einem Rad, aufweist, wobei das Magnetelement des Fahrzeugs die Geschwindigkeitskenngröße in Form eines Magnetfelds bereitstellt. Insbesondere die die Geschwindigkeitskenngröße im Unterschied zum Signal des Signalgebers derart ausgebildet, dass basierend auf der Geschwindigkeitskenngröße stets eine tatsächlich Fahrzeuggeschwindigkeit ermittelbar ist.

Zudem wird vorgeschlagen, dass die Geschwindigkeitserfassungseinheit zumindest einen Sensor aufweist, der zur Detektierung eines Geschwindigkeitssignals ausgebildet ist. Alternativ ist ebenso denkbar, dass die Geschwindigkeitserfassungseinheit keinen Sensor aufweist und das Geschwindigkeitssignal als ein Datensignal durch das Fahrzeug oder die externe Steuervorrichtung übertragen wird. Der Sensor kann beispielsweise als ein Magnetsensor, insbesondere ein Hall-Sensor, oder als ein GNSS-Sensor ausgebildet sein.

Des Weiteren wird vorgeschlagen, dass die Signaldauer des Signals größer als eine Signaldauer des Geschwindigkeitssignals ausgebildet ist. Weiterhin wird vorgeschlagen, dass die Felderzeugungseinheit dazu ausgebildet ist, die Signaldauer des Signals zu variieren. Insbesondere ist die Felderzeugungseinheit dazu ausgebildet ist, die Signaldauer des Signals basierend auf der Geschwindigkeitskenngröße anzupassen. Vorteilhaft kann dadurch die zu ermittelnde Geschwindigkeit angepasst und/oder korrigiert werden.

Zudem wird vorgeschlagen, dass der Signalgeber ein Gehäuse aufweist, wobei das Gehäuse eine mechanische Schnittstelle zur insbesondere lösbaren Verbindung mit dem Fahrrad aufweist. Das Gehäuse kann starr, beispielsweise aus einer Hartplastik, oder flexibel, beispielsweise als ein Schrumpfschlauch, ausgebildet sein. Der Signalgeber kann im Bereich eines vorderen Rads des Fahrrads, beispielsweise an einer Federgabel, oder im Bereich eines hinteren Rads des Fahrrads angeordnet sein.

Zudem betrifft die Erfindung ein Fahrzeug, insbesondere ein Fahrrad, mit einem Signalgeber wie zuvor beschrieben. Vorzugsweise ist der Signalgeber derart positioniert ist, dass ein Verhältnis zwischen einer Magnetfeldstärke des erzeugten Signals an einer Sensorposition des Fahrzeugs und einem Abstand des Signalgebers von einem Signalempfänger des Fahrrads in einem Bereich zwischen 4/10 µT/mm und 200 µT/mm liegt. Vorteilhaft kann dadurch eine sichere Ermittlung der Geschwindigkeit realisiert werden. Unter einer Magnetfeldstärke des erzeugten Signals an einer Sensorposition des Fahrzeugs soll im Zusammenhang dieser Anmeldung insbesondere eine maximal messbare Magnetfeldstärke des Signals der Felderzeugungseinheit durch einen Signalempfänger des Fahrzeugs verstanden werden. Der Abstand zwischen dem Signalgeber und dem Signalempfänger ist vorzugsweise im verwendungsgemäßen Gebrauch konstant ausgebildet, wobei der Absatz des Signalgebers durch unterschiedliche Montagepositionen anpassbar ist. Die untere Schranke ist insbesondere derart ausgelegt, dass ein Verhältnis zwischen der Magnetfeldstärke und dem Abstand zumindest ½ µT/mm, vorzugsweise zumindest 2/3 µT/mm, bevorzugt zumindest 10 µT/mm, besonders bevorzugt zumindest 4/3 µt/mm, entspricht. Die obere Schranke ist insbesondere derart ausgelegt, dass das Verhältnis zwischen der Magnetfeldstärke und dem Abstand höchstens 125 µT/mm, vorzugsweise höchstens 100 µT/mm, bevorzugt höchstens 75 µT/mm, besonders bevorzugt höchstens 60 µT/mm, entspricht.

Aus der DE 694 12 564 T2 ist ein Gerät zur Messung eines Bewegungszustandes eines Fahrzeuges durch Erfassung der Rotation eines Rades des Fahrzeuges bekannt

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Merkmale alternativer Ausführungsformen weisen im Rahmen der Beschreibung die gleichen Bezugszeichen mit einem die Ausführungsform kennzeichnenden zusätzlichen Buchstaben auf.

Es zeigen:
- Fig. 1: eine schematische Ansicht eines Elektrofahrrads mit einem Signalgeber;
- Fig. 2: eine perspektivische Ansicht eines Signalgebers;
- Fig. 3: ein Flussdiagramm mit einem Verfahren zur Ermittlung einer Fahrradgeschwindigkeit;
- Fig. 4: eine schematische Ansicht einer alternativen Ausführungsform eines Elektrofahrrads mit einem Signalgeber;
- Fig. 5: eine perspektivische Ansicht einer alternativen Ausführungsform des Signalgebers;
- Fig. 6: ein Flussdiagramm mit einem weiteren Verfahren zur Ermittlung der Fahrradgeschwindigkeit.

### Beschreibung der Ausführungsbeispiele

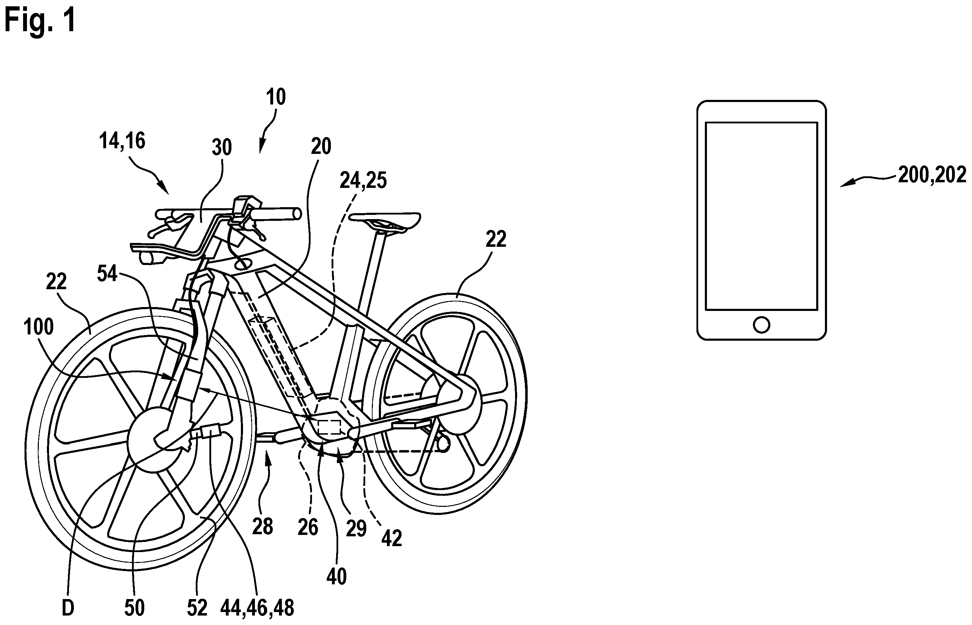

In Fig. 1 ist ein System 10 aufweisend ein Fahrrad 14 mit einem ersten Signalgeber 44 und mit einem zweiten Signalgeber 100 für das Fahrrad 14 beschrieben. Das Fahrrad 14 ist beispielhaft als ein Elektrofahrrad 16 ausgebildet. Das Elektrofahrrad 16 kann beispielsweise als ein Pedelec oder als ein E-Bike ausgebildet sein.

Das Elektrofahrrad 16 weist ein Gehäuse in Form eines Rahmens 20 beziehungsweise eines Fahrradrahmens auf. Mit dem Rahmen 20 sind zwei Räder 22 verbunden. Zudem weist das Elektrofahrrad 16 eine Energieversorgungseinheit 24 in Form eines Akkupacks 25 auf, die durch den Fahrer entnehmbar im Rahmen 20 des Elektrofahrrads 16 angeordnet ist. Zudem weist das Elektrofahrrad 16 eine Antriebseinheit 26 auf, die einen Elektromotor beziehungsweise einen Hilfsmotor umfasst. Der Elektromotor ist vorzugsweise als ein Permanentmagneterregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über die Energieversorgungseinheit 24 mit Energie versorgt. Die Energieversorgungseinheit 24 kann von außen am Rahmen 20 befestigbar oder wie beispielhaft dargestellt im Rahmen 20 integriert ausgebildet sein.

Die Antriebseinheit 26 umfasst eine eine Steuereinheit umfassende Elektronik (nicht dargestellt), die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf.

Die Elektronik und die Antriebseinheit 26 mit dem Elektromotor und der Tretkurbelwelle sind in einem mit dem Rahmen 20 verbundenen Antriebsgehäuse 29 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Elektronik gesteuert oder geregelt wird. Die Elektronik ist dazu ausgebildet, die Antriebseinheit derart anzusteuern, dass der Fahrer des Elektrofahrrads 16 beim Pedalieren unterstützt wird. Die Ansteuerung der Antriebseinheit 26 erfolgt dabei zumindest teilweise basierend auf einer durch das Elektrofahrrad 16 ermittelten Fahrradgeschwindigkeit. Vorzugsweise ist die Steuereinheit durch den Fahrer bedienbar ausgebildet, sodass der Fahrer den Unterstützungsgrad einstellen kann.

Die Elektronik umfasst eine nicht dargestellte Kommunikationsschnittstelle, die zur drahtlosen Verbindung des Elektrofahrrads 16 mit einer externen Vorrichtung 200, beispielsweise einem Smartphone 202, ausgebildet ist. Die Kommunikationsschnittstelle ist beispielhaft als eine kurzreichweite Kommunikationsschnittstelle, insbesondere eine Bluetooth-Schnittstelle, ausgebildet ist. Das Elektrofahrrad 16 umfasst zudem eine zweite Kommunikationsschnittstelle in Form einer langreichweitigen Kommunikationsschnittstelle, insbesondere einer LTE-Schnittstelle. Im Gegensatz zu der kurzreichweitigen Kommunikationsschnittstelle ist mittels der langreichweitigen Kommunikationsschnittstelle eine direkte Datenverbindung mit Servern, die beispielhaft eine Verbindung zum Internet aufweisen, möglich.

Die externe Vorrichtung 200 weist beispielhaft ein Betriebssystem auf, das zur Ausführung von Anwendungssoftware (App) ausgebildet ist. Die externe Vorrichtung 200 kann eine Fahrrad-App aufweisen, die zur Anzeige von Betriebsinformationen des Elektrofahrrads 16 und/oder zur Steuerung des Elektrofahrrads 16 ausgebildet ist. Die Fahrrad-App umfasst dabei mehrere Funktionen, die teilweise durch den Benutzer beziehungsweise Fahrer auswählbar sind. Zudem weist die externe Vorrichtung 200 vorzugsweise eine Signalgeber-App auf, die zur Steuerung oder Einstellung des zweiten Signalgebers 100 ausgebildet ist.

Zudem umfasst das Elektrofahrrad 16, insbesondere die Elektronik des Elektrofahrrads 16, eine Sensoreinheit. Die Sensoreinheit umfasst beispielhaft einen Magnetsensor, zumindest einen Bewegungssensor, einen GNSS-Empfänger zur Erfassung einer Ortskenngröße und einen Drehmomentsensor.

Zudem umfasst das Elektrofahrrad 16 eine Bedieneinheit (nicht dargestellt) zur Bedienung des Elektrofahrrads 16. Die Bedieneinheit ist an einem Lenker 30 des Elektrofahrrads 16 beispielhaft lösbar angeordnet. Die Bedieneinheit weist beispielhaft einen nicht näher dargestellten Ein/Aus-Schalter auf, wobei mittels einer Betätigung des Schalters das Elektrofahrrad 16, insbesondere die Antriebseinheit 26, aktivierbar ausgebildet ist. Zudem ist die Elektronik mittels der Bedieneinheit ansteuerbar ausgebildet, beispielsweise ist mittels einer Bedienung der Bedieneinheit eine Auswahl eines Unterstützungsmodus des Elektrofahrrads 16 möglich. Alternativ oder zusätzlich ist ebenso denkbar, dass die Bedieneinheit zur Steuerung des zweiten Signalgebers 100 ausgebildet ist.

Das Elektrofahrrad 16 weist des Weiteren eine Geschwindigkeitsermittlungseinheit 40 auf, die zur Ermittlung der Fahrzeuggeschwindigkeit beziehungsweise der Fahrradgeschwindigkeit ausgebildet ist. Die Geschwindigkeitsermittlungseinheit 40 umfasst zumindest einen Signalempfänger 42, wobei der Signalempfänger 42 zur Erfassung zumindest eines Geschwindigkeitssignals und/oder eines Signals ausgebildet ist.

Der Signalempfänger 42 ist vorzugsweise integriert im Elektrofahrrad 16 ausgebildet. Beispielhaft ist der Signalempfänger 42 in dem Antriebsgehäuse 29 der Antriebseinheit 26 des Elektrofahrrads 16 angeordnet. Der Signalempfänger 42 umfasst beispielhaft ein Sensorelement, das der Sensoreinheit des Elektrofahrrads 16 zugeordnet ist. Das Sensorelement ist beispielsweise als ein Hall-Sensor zur Erfassung eines Magnetfelds ausgebildet. Der Hall-Sensor ist dabei auf einer Leiterplatte (nicht dargestellt) der Elektronik des Elektrofahrrads 16 im Antriebsgehäuse 29 angeordnet. Alternativ oder zusätzlich sind auch andere Sensorelemente denkbar, wie beispielsweise der GNSS-Empfänger des Sensoreinheit des Elektrofahrrads 16.

Zudem umfasst die Geschwindigkeitsermittlungseinheit 40 den ersten Signalgeber 44. Der erste Signalgeber 44 ist als ein passiver Signalgeber 46 ausgebildet. Der erste Signalgeber 44 ist beispielhaft als ein Magnetelement 48 ausgebildet. Das Magnetelement 48 ist an einer rotierenden Komponente des Elektrofahrrads 16, beispielhaft dem vorderen Rad 22 des Elektrofahrrads 16, befestigt. Das Magnetelement 48 ist beispielhaft an einer Speiche 50 des vorderen Rads 22 lösbar befestigt. Das Magnetelement 48 ist beispielhaft derart ausgebildet, dass unabhängig von der Position des vorderen Rads 22 relativ zu dem Signalempfänger 42 eine Feldstärke des Magnetelements 48 zu gering ist, um eine Geschwindigkeitssignal durch den Signalempfänger 42 zu erfassen. Alternativ wäre ebenso denkbar, dass die Feldstärke groß genug ist, um eine Geschwindigkeitssignal abzuleiten. Die Feldstärke kann durch Wahl der Art und Größe des Magnetelements 48 sowie die Positionierung des Magnetelements 48 angepasst werden. Beispielsweise ist auch eine Positionierung des Magnetelements 48 auf oder innerhalb einer Radfelge 52 des vorderen Rads 22 denkbar, wodurch die Feldstärke an der Position des Signalempfängers 42 beim Umlauf des ersten Signalgebers 44 vergrößerbar ist. Abhängig von der Position des Magnetelements 48 und der Sensitivität des Signalempfängers 42 ist somit eine Erfassung einer Geschwindigkeitskenngröße durch den Signalempfänger 42 möglich oder denkbar.

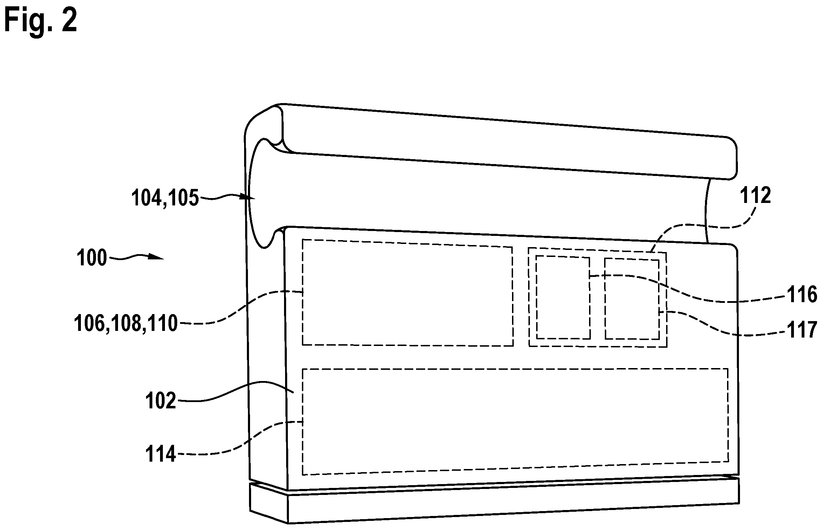

Der zweite Signalgeber 100 ist in Figur 2 in einer perspektivischen Ansicht gezeigt. Der zweite Signalgeber 100 weist ein Gehäuse 102 auf, das beispielhaft aus einer Hartplastik ausgebildet ist. Das Gehäuse 102 umfasst eine mechanische Schnittstelle 104, die zur insbesondere werkzeuglos lösbaren Befestigung des zweiten Signalgebers 100 an oder in dem Elektrofahrrad 16, insbesondere an oder in dem Rahmen 20 des Elektrofahrrads 16, ausgebildet ist. Beispielhaft ist die mechanische Schnittstelle 104 zur Befestigung des zweiten Signalgebers 100 an einer Fahrradgabel 54, insbesondere an einer Federgabel, des Elektrofahrrads 16 ausgebildet. Die mechanische Schnittstelle 104 weist hierfür beispielsweise eine Aufnahme 105 zur teilweisen Aufnahme der Fahrradgabel 54 auf. Die Aufnahme 105 ist beispielhaft derart elastisch ausgebildet, dass das Gehäuse 102 des zweiten Signalgebers 100 mit der Fahrradgabel 54 zur kraft- und formschlüssigen Verbindung verklemmbar ausgebildet ist. Die mechanische Schnittstelle 104 ist vorzugsweise derart ausgebildet, dass der zweite Signalgeber 100 mit unterschiedlichen Fahrradgabeln 54 und/oder an unterschiedlichen Positionen an der Fahrradgabel 54 oder einer anderen Komponente des Elektrofahrrads 16 verbindbar ist. Alternativ oder zusätzlich ist ebenso denkbar, dass der zweite Signalgeber 100 am hinteren Rad anordenbar ist. Vorteilhaft kann dadurch ein Gehäuse 102 für unterschiedliche Elektrofahrräder 16 eingesetzt werden und zudem kann durch die Positionierung des zweiten Signalgebers 100 die Feldstärke angepasst werden, die durch den Signalempfänger 42 erfassbar ist. Alternativ ist auch die Verbindung des Gehäuses 102 des zweiten Signalgebers 100 mit einer anderen Komponente des Elektrofahrrads 16, insbesondere einem anderen Teil des Rahmens 20 oder dem Antriebsgehäuse 29, denkbar. Alternativ oder zusätzlich sind auch andere Verbindungsarten denkbar, wie beispielsweise eine Verschraubung, ein Klettverschluss oder dergleichen.

Der zweite Signalgeber 100 umfasst zudem eine Felderzeugungseinheit 106, die dazu ausgebildet ist, ein Signal in Form eines zeitlich und/oder räumlich variierenden magnetischen Felds zu erzeugen. Die Felderzeugungseinheit 106 ist beispielhaft als ein Elektromagnet 108, insbesondere als eine Spule 110, ausgebildet. Zudem umfasst der zweite Signalgeber 100 eine Elektronik 112 zur Steuerung oder Regelung der Felderzeugungseinheit 106 auf. Insbesondere ist die Elektronik 112 dazu ausgebildet, die Felderzeugungseinheit 106 zur Anpassung der Feldstärke und/oder Form des emittierten magnetischen Felds anzusteuern. Beispielhaft umfasst der zweite Signalgeber 100 zudem eine Energieversorgung 114, die beispielhaft in Form einer Li-Ion Rundzelle ausgebildet ist. Die Energieversorgung 114, die Elektronik 112 und die Felderzeugungseinheit 106 sind elektrisch miteinander verbunden. Alternativ ist ebenso denkbar, dass der zweite Signalgeber 100 elektrisch mit dem Elektrofahrrad 16, insbesondere dem Akkupack 25 des Elektrofahrrads 16, verbunden ist.

Der zweite Signalgeber 100 ist vorzugsweise derart ausgebildet, dass ein Verhältnis zwischen einer Magnetfeldstärke des erzeugten Signals an einer Sensorposition des Elektrofahrrads 16 und einem Abstand D des zweiten Signalgebers 100 von dem Signalempfänger 42 des Elektrofahrrads 16 in einem Bereich zwischen 4/10 µT/mm und 200 µT/mm liegt. Bei der Sensorposition handelt es sich beispielhaft um die Position des Signalempfängers 42 des Elektrofahrrads 16.

Zudem weist der zweite Signalgeber 100 optional eine Geschwindigkeitserfassungseinheit 116 auf. Die Geschwindigkeitserfassungseinheit 116 ist zur Erfassung eines Geschwindigkeitssignals basierend auf dem ersten Signalgeber 44 des Elektrofahrrads 16 ausgebildet. Die Geschwindigkeitserfassungseinheit 116 ist der Elektronik 112 des zweiten Signalgebers 100 zugeordnet. Die Geschwindigkeitserfassungseinheit 116 umfasst beispielhaft einen Sensor in Form eines Reedschalters. Zudem ist die Geschwindigkeitserfassungseinheit 116 dazu ausgebildet, basierend auf dem Geschwindigkeitssignal eine Geschwindigkeitskenngröße zu ermitteln. Die ermittelte Geschwindigkeitskenngröße wird zur Ansteuerung der Felderzeugungseinheit 106 verwendet, wobei die Geschwindigkeitskenngröße derart ausgebildet sein kann, dass basierend auf der Geschwindigkeitskenngröße des zweiten Signalgebers 100 eine tatsächliche oder eine virtuelle Geschwindigkeit ermittelbar ist. Die virtuelle Geschwindigkeit kann höher oder tiefer als die tatsächliche Geschwindigkeit liegen.

Zudem umfasst der zweite Signalgeber 100 eine Kommunikationsschnittstelle 117. Die Kommunikationsschnittstelle 117 ist beispielhaft als eine drahtlose Kommunikationsschnittstelle, vorzugsweise als eine Bluetooth-Schnittstelle, ausgebildet. Die Kommunikationsschnittstelle 117 des zweiten Signalgebers 100 ist vorzugsweise derart ausgebildet, dass Informationen zwischen dem zweiten Signalgeber 100 und dem Elektrofahrrad 16 und/oder der externen Vorrichtung 200 austauschbar sind.

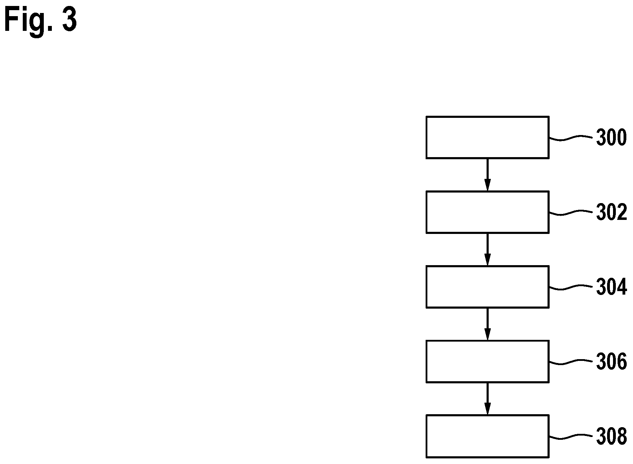

In Figur 3 ist ein Flussdiagram mit einem beispielhaften Verfahren zu Ermittlung einer Fahrradgeschwindigkeit gezeigt.

In einem ersten Schritt 300 wird das Elektrofahrrad 16 derart bewegt, dass das vordere Rad 22 mit dem ersten Signalgeber 44 rotiert und periodisch an dem zweiten Signalgeber 100 vorbeibewegt wird.

In einem zweiten Schritt 302 wird der erste Signalgeber 44 durch den zweiten Signalgeber 100, insbesondere durch die Geschwindigkeitserfassungseinheit 116 des zweiten Signalgebers 100, periodisch mit jeder Umdrehung ein Mal erfasst. Die Erfassung der Anwesenheit des ersten Signalgebers 44, insbesondere der zeitliche Abstand zwischen den Erfassungen, entspricht dabei einem Geschwindigkeitssignal, durch das eine Fahrradgeschwindigkeit ermittelbar ist. Eine Größe der Felge und/oder des Rad 22 kann dabei auf der Elektronik 112, insbesondere einem Datenspeicher (nicht dargestellt) der Elektronik 112, des zweiten Signalgebers 100 oder auf der Elektronik es Elektrofahrrads 16 hinterlegt sein. Alternativ oder zusätzlich ist auch denkbar, dass die Größe der Felge und/oder des Rads 22 durch die externe Vorrichtung 200 bereitgestellt wird. Dies kann beispielhaft automatisch oder durch eine Eingabe eines Benutzers und/oder Fahrers erfolgen.

In einem dritten Schritt 304 wird die Felderzeugungseinheit 106 des zweiten Signalgebers 100 basierend auf der durch die Geschwindigkeitserfassungseinheit 116 erfassten Information angesteuert. Die Geschwindigkeitserfassungseinheit 116 erfasst dabei ein Geschwindigkeitssignal, wobei basierend auf dem Geschwindigkeitssignal die tatsächliche Geschwindigkeit des Elektrofahrrads 16 ermittelbar ist. Die Felderzeugungseinheit 106 sendet daraufhin ein Signal in Form eines zeitlich und/oder räumlich variierenden magnetischen Felds aus. Das Signal weist dabei eine Signaldauer in einem Bereich zwischen 5 ms und 40 ms, beispielhaft 10 ms auf. Zusätzlich wird eine Signalstärke des Signals während der Signaldauer variiert, beispielhaft derart, dass die Signalstärke in der Mitte des Signals maximal ist. Zwischen zwei Signalen ist die Signalstärke im Wesentlich null.

In einem vierten Schritt 306 erfolgt die Erfassung des Signals des zweiten Signalgebers 100 durch den Signalempfänger 42 des Elektrofahrrads 16.

in einem fünften Schritt 308 erfolgt die Ermittlung der Fahrradgeschwindigkeit durch die Geschwindigkeitsermittlungseinheit 40 des Elektrofahrrads 16 basierend auf dem Signal des zweiten Signalgebers 100.

Der zweite Signalgeber 100 kann somit zur optimalen und präzisen Ermittlung der Fahrradgeschwindigkeit eingesetzt werden. Alternativ ist auch denkbar, dass zu Systemtestzwecken dem System ein Signal bereitgestellt wird, basierend auf welchem eine virtuelle, insbesondere eine zu niedrige oder zu hohe, Fahrradgeschwindigkeit ermittelt wird.

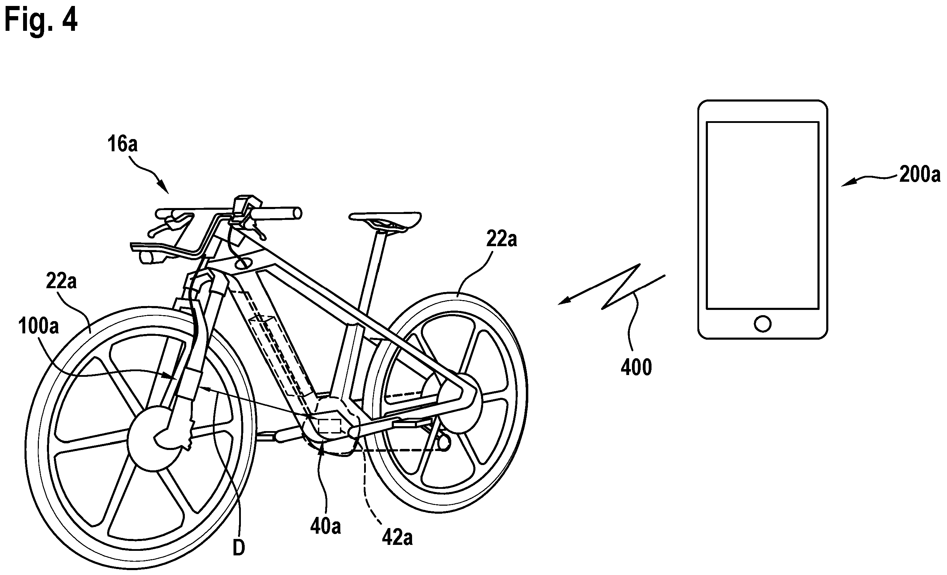

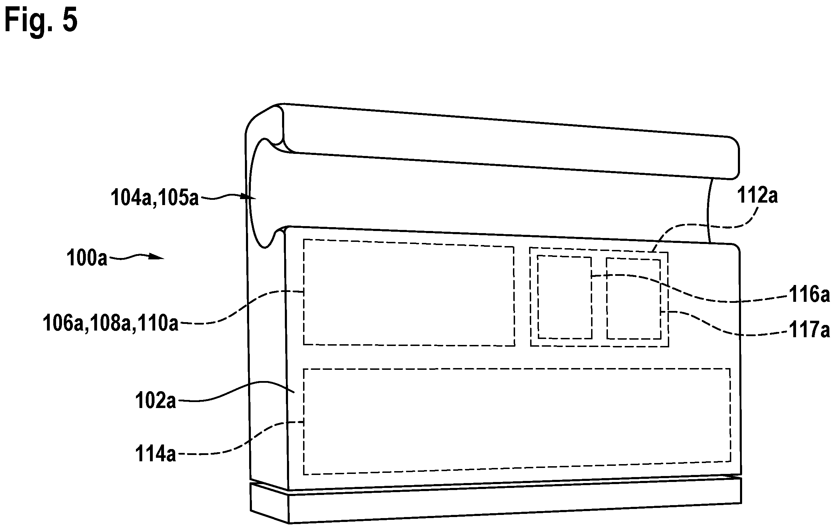

In Fig. 4 ist ein zweites Ausführungsbeispiel eines Elektrofahrrads 16a mit einem zweiten Signalgeber 100a (siehe Fig. 5) in einer perspektivischen Ansicht gezeigt.

Das Elektrofahrrad 16a unterscheidet sich von dem zuvor beschriebenen Elektrofahrrad 16 dabei insbesondere dadurch, dass Die Geschwindigkeitsermittlungseinheit 40a des Elektrofahrrads 16a keinen ersten Signalgeber aufweist und somit kein Magnet an den Rädern 22a befestigt ist.

Der zweite Signalgeber 100a unterscheidet sich von dem zuvor beschriebenen zweiten Signalgeber 100 insbesondere dadurch, dass der zweite Signalgeber 100a keine Geschwindigkeitserfassungseinheit mit einem Reedschalter wie zuvor beschrieben aufweist.

In dieser Ausführungsform erfolgt dabei die Ermittlung der Geschwindigkeit ohne einen Signalgeber, der an einer beweglichen Fahrradkomponente befestigt ist.

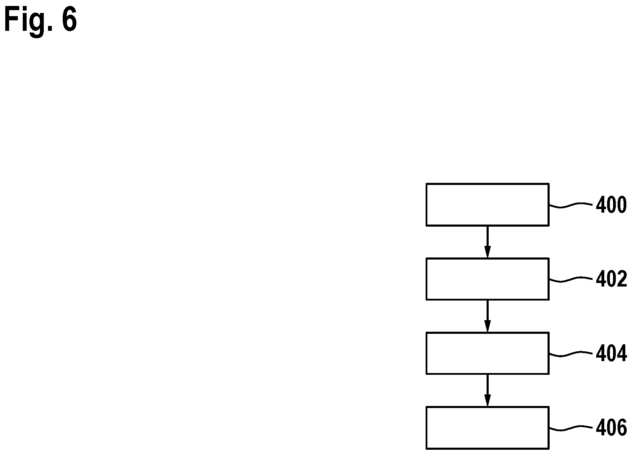

In Figur 6 ist Verfahren zur Ermittlung einer Fahrradgeschwindigkeit basierend auf dem System gemäß Figur 3 gezeigt.

In einem ersten Schritt 400 wird dem zweiten Signalgeber 100a mittels der externen Vorrichtung 200a eine Geschwindigkeitskenngröße bereitgestellt. Bei der Geschwindigkeitskenngröße kann es sich dabei um eine um eine tatsächlich Geschwindigkeitskenngröße, mittels der eine tatsächliche Geschwindigkeit des Elektrofahrrads 16a ermittelbar ist, oder um eine virtuelle Geschwindigkeitskenngröße, mittels der die tatsächlich Geschwindigkeit des Elektrofahrrads 16a nicht ermittelbar ist, handeln.

In einem zweiten Schritt 402 wird die Felderzeugungseinheit 106a des zweiten Signalgebers 100a basierend auf der erfassten Geschwindigkeitskenngröße angesteuert und es wird ein Signal erzeugt.

in einem dritten Schritt 404 wird das Signal des zweiten Signalgebers 100a von der Geschwindigkeitsermittlungseinheit 40a des Elektrofahrrads 16a, insbesondere dem Signalempfänger 42a des Elektrofahrrads 16a, erfasst.
in einem vierten Schritt 406 wird das Elektrofahrrad 16a, insbesondere die Antriebseinheit 26a des Elektrofahrrads 16a, basierend auf dem Signal des zweiten Signalgebers 100a angesteuert. Alternativ oder zusätzlich kann zudem eine Geschwindigkeit des Elektrofahrrads 16a basierend auf dem Signal des zweiten Signalgebers 100a am Elektrofahrrad 16a angezeigt werden.

## Patentansprüche

1. Signalgeber zur Ermittlung einer Fahrzeuggeschwindigkeit, insbesondere einer Fahrradgeschwindigkeit, aufweisend eine Felderzeugungseinheit (106), die dazu ausgebildet ist, ein Signal in Form eines zeitlich und/oder räumlich variierenden magnetischen Felds zu erzeugen, wobei der Signalgeber (100) eine Elektronik (112) zur Steuerung oder Regelung der Felderzeugungseinheit (106) aufweist,
**dadurch gekennzeichnet, dass**
das Signal eine Signaldauer aufweist, die in einem Bereich zwischen 5 ms und 40 ms liegt, und dass das Signal eine Signalstärke aufweist, die während der Signaldauer variiert.

2. Signalgeber nach Anspruch 1, **dadurch gekennzeichnet, dass** über das Signal, insbesondere über eine Form des Signals oder über einem Abstand zweier Signale, eine Geschwindigkeit ermittelbar ist.

3. Signalgeber nach einem der vorgehenden Ansprüche, **dadurch gekennzeichnet, dass** der Signalgeber (100) eine Geschwindigkeitserfassungseinheit (116) zur Ermittlung einer Geschwindigkeitskenngröße aufweist.

4. Signalgeber nach Anspruch 3, **dadurch gekennzeichnet, dass** die Geschwindigkeitserfassungseinheit (116) einen Sensor aufweist, der zur Erfassung eines Geschwindigkeitssignals ausgebildet ist.

5. Signalgeber nach Anspruch 4, **dadurch gekennzeichnet, dass** die Signaldauer des Signals größer als eine Signaldauer des Geschwindigkeitssignals ausgebildet ist.

6. Signalgeber nach einem der vorgehenden Ansprüche, **dadurch gekennzeichnet, dass** die Felderzeugungseinheit (106) dazu ausgebildet ist, die Signaldauer des Signals zu variieren.

7. Signalgeber nach einem der Ansprüche 3 bis 6, **dadurch gekennzeichnet, dass** die Felderzeugungseinheit (106) dazu ausgebildet ist, die Signaldauer des Signals basierend auf der Geschwindigkeitskenngröße anzupassen.

8. Signalgeber nach einem der vorgehenden Ansprüche, **dadurch gekennzeichnet, dass** der Signalgeber (100) ein Gehäuse (102) aufweist, wobei das Gehäuse (102) eine mechanische Schnittstelle (104) zur insbesondere lösbaren Verbindung mit einem Fahrrad aufweist.

9. Signalgeber nach einem der vorgehenden Ansprüche, **dadurch gekennzeichnet, dass** der Signalgeber (100) eine Kommunikationsschnittstelle zur drahtlosen und/oder drahtgebundenen Austausch von Informationen und/oder Daten zwischen dem Signalgeber (100) und einem Smartphone aufweist.

10. Signalgeber nach einem der vorgehenden Ansprüche, **dadurch gekennzeichnet, dass** der Signalgeber (100) ein Gehäuse (102) aufweist, das mit einem Antriebsgehäuse (29) verbindbar ausgebildet ist.

11. Fahrzeug, insbesondere Fahrrad, mit einem Signalgeber (100) nach einem der vorhergehenden Ansprüche.

12. Fahrzeug, insbesondere Elektrofahrrad (16), nach Anspruch 11, wobei der Signalgeber (100) derart positioniert ist, dass ein Verhältnis zwischen einer Magnetfeldstärke des erzeugten Signals an einer Sensorposition des Elektrofahrrads (16) und einem Abstand des Signalgebers (100) von einem Signalempfänger (42) des Elektrofahrrads (16) in einem Bereich zwischen 4/10 µT/mm und 200 µT/mm liegt.

## Claims

1. Signal transmitter for determining a vehicle speed, in particular a bicycle speed, having a field generation unit (106) designed to generate a signal in the form of a magnetic field that varies in time and/or space, wherein the signal transmitter (100) has electronics (112) for open-loop or closed-loop control of the field generation unit (106),
**characterized in that**
the signal has a signal duration in a range between 5 ms and 40 ms and **in that** the signal has a signal strength that varies over the signal duration.

2. Signal transmitter according to Claim 1, **characterized in that** a speed can be determined by means of the signal, in particular by means of a shape of the signal or by means of a spacing between two signals.

3. Signal transmitter according to either one of the preceding claims, **characterized in that** the signal transmitter (100) has a speed detection unit (116) for determining a speed characteristic variable.

4. Signal transmitter according to Claim 3, **characterized in that** the speed detection unit (116) has a sensor designed for detecting a speed signal.

5. Signal transmitter according to Claim 4, **characterized in that** the signal duration of the signal is formed to be greater than a signal duration of the speed signal.

6. Signal transmitter according to any one of the preceding claims, **characterized in that** the field generation unit (106) is designed to vary the signal duration of the signal.

7. Signal transmitter according to any one of Claims 3 to 6, **characterized in that** the field generation unit (106) is designed to adapt the signal duration of the signal based on the speed characteristic variable.

8. Signal transmitter according to any one of the preceding claims, **characterized in that** the signal transmitter (100) has a housing (102), wherein the housing (102) has a mechanical interface (104) for the, in particular releasable, connection to a bicycle.

9. Signal transmitter according to any one of the preceding claims, **characterized in that** the signal transmitter (100) has a communication interface for the wireless and/or wired exchange of information and/or data between the signal transmitter (100) and a smartphone.

10. Signal transmitter according to any one of the preceding claims, **characterized in that** the signal transmitter (100) has a housing (102) designed to be connectable to a drive housing (29).

11. Vehicle, in particular bicycle, having a signal transmitter (100) according to any one of the preceding claims.

12. Vehicle, in particular electric bicycle (16), according to Claim 11, wherein the signal transmitter (100) is positioned in such a way, that a ratio between a magnetic field strength of the generated signal at a sensor position of the electric bicycle (16) and a distance between the signal transmitter (100) and a signal receiver (42) of the electric bicycle (16) is in a range between 4/10 µT/mm and 200 µT/mm.

## Revendications

1. Transmetteur de signal pour déterminer une vitesse de véhicule, notamment une vitesse de bicyclette, comprenant une unité de génération de champ (106) qui est conçue pour générer un signal sous la forme d'un champ magnétique variant dans le temps et/ou dans l'espace, le transmetteur de signal (100) comprenant une électronique (112) destinée à commander ou à réguler l'unité de génération de champ (106),
**caractérisé en ce que**
le signal présente une durée de signal qui se situe dans une plage comprise entre 5 ms et 40 ms, et **en ce que** le signal présente une intensité de signal qui varie pendant la durée du signal.

2. Transmetteur de signal selon la revendication 1, **caractérisé en ce qu'**une vitesse peut être déterminée par l'intermédiaire du signal, notamment par l'intermédiaire d'une forme du signal ou par l'intermédiaire d'une distance entre deux signaux.

3. Transmetteur de signal selon l'une quelconque des revendications précédentes, **caractérisé en ce que** le transmetteur de signal (100) comprend une unité de détection de vitesse (116) pour déterminer une grandeur caractéristique de vitesse.

4. Transmetteur de signal selon la revendication 3, **caractérisé en ce que** l'unité de détection de vitesse (116) comprend un capteur qui est conçu pour détecter un signal de vitesse.

5. Transmetteur de signal selon la revendication 4, **caractérisé en ce que** la durée du signal est conçue pour être supérieure à une durée du signal de vitesse.

6. Transmetteur de signal selon l'une quelconque des revendications précédentes, **caractérisé en ce que** l'unité de génération de champ (106) est conçue pour faire varier la durée du signal.

7. Transmetteur de signal selon l'une quelconque des revendications 3 à 6, **caractérisé en ce que** l'unité de génération de champ (106) est conçue pour ajuster la durée du signal sur la base de la grandeur caractéristique de vitesse.

8. Transmetteur de signal selon l'une quelconque des revendications précédentes, **caractérisé en ce que** le transmetteur de signal (100) comprend un boîtier (102), le boîtier (102) comprenant une interface mécanique (104) permettant une connexion, notamment amovible, à une bicyclette.

9. Transmetteur de signal selon l'une quelconque des revendications précédentes, **caractérisé en ce que** le transmetteur de signal (100) comprend une interface de communication permettant un échange sans fil et/ou filaire d'informations et/ou de données entre le transmetteur de signal (100) et un téléphone intelligent.

10. Transmetteur de signal selon l'une quelconque des revendications précédentes, **caractérisé en ce que** le transmetteur de signal (100) comprend un boîtier (102) qui est conçu pour être connectable à un boîtier d'entraînement (29).

11. Véhicule, notamment bicyclette, comprenant un transmetteur de signal (100) selon l'une quelconque des revendications précédentes.

12. Véhicule, notamment une bicyclette électrique (16), selon la revendication 11, **caractérisé en ce que** le transmetteur de signal (100) est positionné de manière à ce qu'un rapport entre une intensité du champ magnétique du signal généré à une position de capteur de la bicyclette électrique (16) et une distance du transmetteur de signal (100) par rapport à un récepteur de signal (42) de la bicyclette électrique (16) se situe dans une plage comprise entre 4/10 µT/mm et 200 µT/mm.
